# EUROPÄISCHE PATENTSCHRIFT

(11) **EP 3 887 143 B1**
(45) Veröffentlichungstag und Bekanntmachung des Hinweises auf die Patenterteilung: **11.03.2026**
(21) Anmeldenummer: 19828202.2
(22) Anmeldetag: 26.11.2019
(51) Int. Cl.: B32B 5/26, B32B 5/02, B32B 5/08, B32B 7/022, B32B 29/00, F16D 69/02

(54) **VERFAHREN ZUM HERSTELLEN EINES MEHRLAGIGEN NASSLAUF-REIBMATERIALS**
METHOD FOR PRODUCING A MULTI-LAYERED WET FRICTION MATERIAL
PROCÉDÉ DE FABRICATION D'UN MATÉRIAU DE FRICTION HUMIDE MULTICOUCHE

(30) Priorität: 27.11.2018 DE 102018129892
(43) Veröffentlichungstag der Anmeldung: 06.10.2021
(73) Patentinhaber: Schaeffler Technologies AG & Co. KG, 91074 Herzogenaurach (DE)
(72) Erfinder: STEINMETZ, Stefan, 67269 Grünstadt (DE); BONET, Alexander, 55734 Idar-Oberstein (DE)
(74) Vertreter: Schaeffler Technologies
(86) Internationale Anmeldenummer: PCT/DE2019/101011
(87) Internationale Veröffentlichungsnummer: WO 2020/108701

(56) Entgegenhaltungen:
- EP-B1- 0 807 766
- EP-B1- 0 971 151
- JP-A- 2002 001 749
- US-A- 5 585 166

## Beschreibung

Die Erfindung betrifft ein Verfahren zum Herstellen eines mehrlagigen Nasslauf-Reibmaterials mit mindestens einer Unterlage und mindestens einer Oberlage, die stoffschlüssig miteinander verbunden werden.

US 5 585 166 A offenbart ein Verfahren zur Herstellung eines Reibbelags mit Fluidkühlung.

EP 0 971 151 B1 offenbart ein Verfahren zur Herstellung eines nasslaufenden zweischichtigen Hochleistungsreibmaterials.

JP 2002 001 749 A offenbart die Herstellung dekorativer Oberflächen, wie Dekorplatten beispielsweise für Gebäudeböden, Gebäudewände oder -decken, für Möbel etc. jedoch nicht explizit die Herstellung von Nasslauf-Reibmaterialien.

Aus der europäischen Patentschrift EP 0 807 766 B1 ist ein Verfahren zur Herstellung asbestfreien Reibungsmaterials bekannt, welches das Ausbilden einer ersten Schicht mit ölaufsaugenden Fasern und/oder Füllstoffen, und das Verkleben einer zweiten Schicht mit der ersten Schicht umfasst, wobei die zweite Schicht temperaturfeste und hochfeste Fasern und/oder reibungsmodifizierende Materialien umfasst, wobei die erste Schicht eine geringere Dichte als die zweite Schicht aufweist.

Aus der europäischen Patentschrift EP 0 854 305 B1 ist ein Verfahren zum Herstellen eines asbestfreien Reibungsmaterials bekannt, mit folgenden Schritten: Formen einer primären Schicht, die nichtlineare elastische Fasern, Baumwollfasern und Füllmaterial aufweist, und Haftverbinden einer sekundären Schicht mit der primären Schicht, wobei die sekundäre Schicht Aramidfasern, wahlweise Füllmaterial, und wahlweise synthetisches Graphit aufweist, wobei die sekundäre Schicht ferner Baumwollfasern und poröse Kohlenstoffteilchen aufweist.

Aufgabe der Erfindung ist es, das Herstellen eines mehrlagigen Nasslauf-Reibmaterials mit mindestens einer Unterlage und mindestens einer Oberlage, die stoffschlüssig miteinander verbunden werden, zu vereinfachen.

Diese Aufgabe wird durch ein Verfahren mit den Merkmalen gemäß Anspruch 1 gelöst.

Die Aufgabe ist also bei einem Verfahren zum Herstellen eines mehrlagigen Nasslauf-Reibmaterials mit mindestens einer Unterlage und mindestens einer Oberlage, die stoffschlüssig miteinander verbunden werden, dadurch gelöst, dass die Unterlage und die Oberlage zunächst aus unterschiedlichen Materialien unabhängig voneinander hergestellt werden, bevor die Unterlage mit der Oberlage verbunden wird. Die Unterlage wird auch mit dem englischen Begriff Underlayer bezeichnet. Die Oberlage wird auch mit dem englischen Begriff Overlayer bezeichnet. Der Material-Herstellungsprozess wird von dem Mehrschicht-Prozess entkoppelt. Das bedeutet, dass Reibmaterial für die Unterlage unabhängig von dem Reibmaterial für die Oberlage hergestellt wird. Somit hat der Herstellungsprozess für das Reibmaterial alle Freiheitsgrade, ohne dass der Mehrschicht-Prozess diese einschränkt. Die getrennt voneinander hergestellten Reibmaterialien für die Unterlage und die Oberlage werden anschließend in einem zusätzlichen Prozess, zum Beispiel in einem Laminier- oder Kaschierprozess, zu dem mehrlagigen Nasslauf-Reibmaterial miteinander verbunden. Das beanspruchte Verfahren zeichnet sich unter anderem dadurch aus, dass die unterschiedlichen Materialien mittels Temperatur und Druck in einem kontinuierlichen oder in einem diskontinuierlichen Verfahren miteinander verbunden werden. Die Verbindung kommt dabei entweder durch ein in einigen Materialien bereits vorhandenes Bindermaterial oder durch ein auf die Grenzfläche zweier Schichten gezielt aufgebrachtes Bindermaterial zustande. Je nach Bedarf kann dabei die Grenzfläche zwischen zwei Schichten dicht, das heißt für Fluide undurchdringbar, oder porös, das heißt für Fluide durchdringbar, ausgelegt werden.

Ein bevorzugtes Ausführungsbeispiel des Verfahrens ist dadurch gekennzeichnet, dass die Unterlage und die Oberlage aus unterschiedlichen Rezepturen hergestellt und als Rohpapiere zugeführt werden. Die Unterlage und die Oberlage werden vorzugsweise jeweils in einem Papierprozess mit zwei Stoffaufläufen hergestellt, aber nicht direkt miteinander verbunden, sondern nach der Herstellung zum Beispiel auf Coils aufgewickelt, von denen die Rohpapiere für die Unterlage und die Oberlage dann in einem nachfolgenden Prozess oder Prozessschritt zugeführt werden.

Das erfindungsgemäße Verfahren ist gekennzeichnet durch eine Oberlagenrezeptur mit zwanzig bis sechzig Prozent Füllstoff, zehn bis vierzig Prozent Zellstoff, fünf bis zehn Prozent Aramid und fünfundzwanzig bis fünfunddreißig Prozent Phenolharz; und gekennzeichnet durch eine Unterlagenrezeptur mit zehn bis fünfzig Prozent Füllstoff, zehn bis vierzig Prozent Zellstoff, fünf bis zehn Prozent Aramid, fünf bis fünfzehn Prozent Carbon und fünfundzwanzig bis fünfunddreißig Prozent Phenolharz. Das Reibmaterial dient vorteilhaft zur Darstellung von Reibbelagdicken, die kleiner als ein Millimeter sind. Reibbeläge, die mit dem nasslaufenden Reibmaterial hergestellt werden, sind zum Beispiel 0,6 Millimeter oder 0,75 Millimeter dick.

Ein weiteres bevorzugtes Ausführungsbeispiel des Verfahrens ist dadurch gekennzeichnet, dass die Unterlage ein Flächengewicht von hundert bis zweihundert Gramm pro Quadratmeter aufweist, wobei die Oberlage ein Flächengewicht von zweihundert bis vierhundert Gramm pro Quadratmeter aufweist. Diese Flächengewichte haben sich bei Versuchen mit dem beanspruchten Verfahren als besonders vorteilhaft erwiesen.

Erfindungsgemäß ist das Verfahrens dadurch gekennzeichnet, dass die Unterlage mit einem Bindermaterial beschichtet wird, bevor die mit dem Bindermaterial beschichtete Unterlage mit der Oberlage verbunden wird. Das Verbinden der Unterlage mit der Oberlage erfolgt vorzugsweise unter Druckeinwirkung und unter Temperatureinwirkung beziehungsweise Wärmeinwirkung.

Ein weiteres bevorzugtes Ausführungsbeispiel des Verfahrens ist dadurch gekennzeichnet, dass die Unteralge mit einem Harzpulver als Bindermaterial beschichtet wird. Besonders bevorzugt wird eine Streupulverbeschichtung mit Phenolharzpulver angewendet, um die Unterlage mit dem Bindermaterial zu beschichten.

Ein weiteres bevorzugtes Ausführungsbeispiel des Verfahrens ist dadurch gekennzeichnet, dass die unterschiedlichen Materialien mittels Temperatur und Druck miteinander verbunden werden. Der Druck wird zum Beispiel durch Walzen oder Pressen aufgebracht. Die Temperatur kann durch Wärmezufuhr, zum Beispiel über Strahlungswärme, zugeführt werden.

Ein weiteres bevorzugtes Ausführungsbeispiel des Verfahrens ist dadurch gekennzeichnet, dass die vorzugsweise mit einem beziehungsweise dem Bindermaterial beschichtete Unterlage in einem Laminierprozess oder Kaschierprozess mit der Oberlage verbunden wird. Zu diesem Zweck können die beiden Lagen zusammen mit dem Bindermaterial zum Beispiel zwischen zwei Walzen, insbesondere zwei vorzugsweise beheizten Kalanderwalzen, durchgeführt werden.

Erfindungsgemäß ist das Verfahrens dadurch gekennzeichnet, dass die vorzugsweise mit einem beziehungsweise dem Bindermaterial beschichtete Unterlage in einer Doppelbandpresse mit der Oberlage verbunden wird. Mit der Doppelbandpresse konnten bei im Rahmen der vorliegenden Erfindung durchgeführten Versuchen bereits gute Ergebnisse erzielt werden. In der Doppelbandpresse werden die beiden Lagen vorteilhaft mit geeigneten Heizvorrichtungen beheizt. Darüber hinaus werden die miteinander verbundenen Lagen anschließend noch mit geeigneten Kühlvorrichtungen in der Doppelbandpresse gekühlt. Danach kann das fertige nasslaufende Reibmaterial zum Beispiel auf eine geeignete Rolle aufgewickelt werden, bevor es dann weiter verarbeitet wird, zum Beispiel durch Stanzen.

Beschrieben wird hier auch eine Anlage zum Herstellen eines mehrlagigen Nasslauf-Reibmaterials mit mindestens einer Unterlage und mindestens einer Oberlage, die stoffschlüssig miteinander verbunden werden, gemäß einem vorab beschriebenen Verfahren. Die Anlage umfasst vorteilhaft eine Doppelbandpresse, in der unterschiedliche Rohpapiere von Coils zugeführt werden. Die Anlage umfasst des Weiteren vorteilhaft eine Streupulverbeschichtungsvorrichtung. Über die Streupulverbeschichtungsvorrichtung wird ein geeignetes Bindermaterial zugeführt.

Die Erfindung betrifft des Weiteren ein Nasslauf-Reibmaterial, das insbesondere auf einer vorab beschriebenen Anlage, gemäß einem vorab beschriebenen Verfahren hergestellt wurde. Bei dem mehrlagigen Nasslauf-Reibmaterial handelt es sich um ein faserbasiertes Reibmaterial für nasslaufende Anwendungen, wie zum Beispiel in Doppelkupplungsgetrieben, Automatikgetrieben, Motorradgetrieben, Einfach- und Haltekupplungen, Differentialen, Hybridkupplungen, Wandlerkupplungen und Synchronisationen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine Oberlage im Schnitt;
Figur 2 eine Unterlage im Schnitt;
Figur 3 eine schematische Darstellung eines Verfahrensschritts bei der Herstellung eines nasslaufenden Reibmaterials;
Figur 4 eine schematische Darstellung eines weiteren Verfahrensschritts bei der Herstellung eines nasslaufenden Reibmaterials;
Figur 5 das nasslaufende Reibmaterial im Schnitt; und
Figur 6 eine Anlage zur Herstellung des Nasslauf-Reibmaterials.

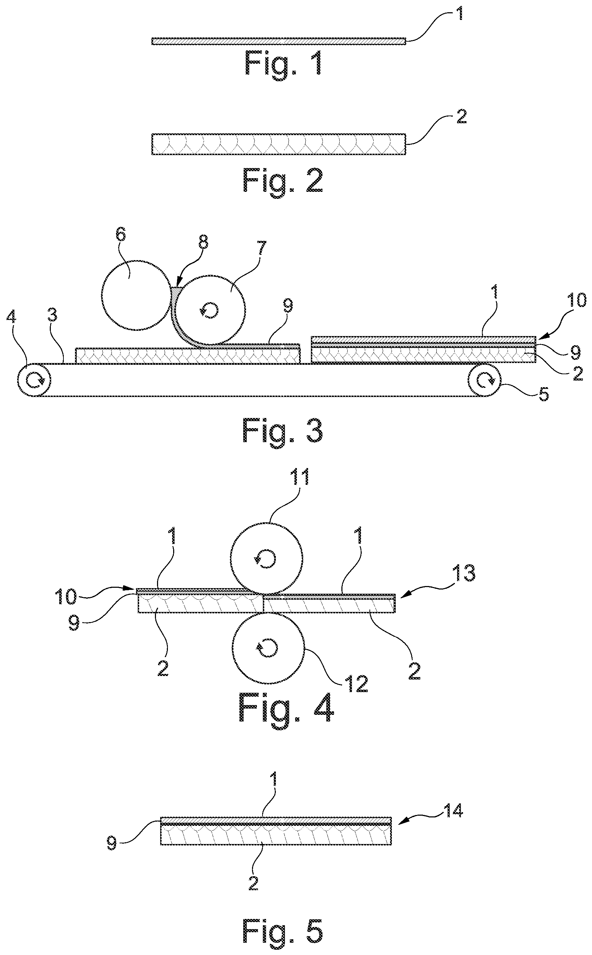

In Figur 1 ist eine Oberlage 1 zur Herstellung eines in Figur 5 mit 14 bezeichneten Nasslauf-Reibmaterials vereinfacht im Schnitt dargestellt. In Figur 2 ist eine Unterlage 2 zur Herstellung des in Figur 5 mit 14 bezeichneten Nasslauf-Reibmaterials vereinfacht im Schnitt dargestellt. Die Oberlage 1 und die Unterlage 2 werden unabhängig voneinander mit einem herkömmlichen Papierherstellungsverfahren hergestellt, das auch verkürzt als Papierverfahren bezeichnet wird.

In Figur 3 ist schematisch dargestellt, dass bei der Herstellung des Nasslauf-Reibmaterials 14 zunächst die Unterlage 2 einem Transportband 3 zugeführt wird. Das Transportband 3 wird mit Hilfe von zwei Transportrollen 4, 5 angetrieben.

Mit Hilfe von zwei Binderwalzen 6, 7 wird ein Bindermaterial 8 in Form einer Bindermaterialschicht 9 auf die Unterlage 2 aufgebracht. Auf die Bindermaterialschicht 9 wird dann die Oberlage 1 aufgebracht. Daraus ergibt sich ein Halbzeug 10, bei welchem die Bindermaterialschicht 9 noch nicht ausgehärtet ist.

Bei dem Bindermaterial handelt es sich um einen Kleber, der zum Beispiel ein Harz, insbesondere ein Phenolharz, umfasst. Der Kleber, insbesondere das Harz, härtet unter Wärmeeinwirkung aus, so dass die Unterlage 2 über die Bindermaterialschicht 9 stoffschlüssig und stabil mit der Oberlage 1 verbunden wird.

In Figur 4 ist schematisch angedeutet, dass das Halbzeug 10 aus Figur 3 zwischen zwei Kalanderwalzen 11, 12 hindurchgeführt wird, um die Oberlage 1 mit Hilfe der Bindermaterialschicht 9 stoffschlüssig mit der Unterlage 2 zu verbinden. Die Kalanderwalzen 11, 12 sind vorteilhaft beheizt, um der Bindermaterialschicht 9 die zum Aushärten benötigte Wärme zuzuführen. Daraus ergibt sich ein Zwischenprodukt 13. In Figur 5 ist das Nasslauf-Reibmaterial 14 schematisch im Schnitt dargestellt. Die Oberlage 1 ist mit Hilfe der Bindermaterialschicht 9 stoffschlüssig stabil mit der Unterlage 2 verbunden. Die Unterlage 1 und die Oberlage 2 sind aus unterschiedlichen Materialien hergestellt.

Die getrennt voneinander hergestellten Materialien werden in einem zusätzlichen Prozess, zum Beispiel in dem in Figur 4 angedeuteten Laminier- oder Kaschierprozess, zu dem in Figur 5 dargestellten mehrlagigen Material miteinander verbunden. Dieser Prozess zeichnet sich dadurch aus, dass die unterschiedlichen Materialien mittels Druck und Temperatur in einem kontinuierlichen oder diskontinuierlichen Verfahren miteinander verbunden werden.

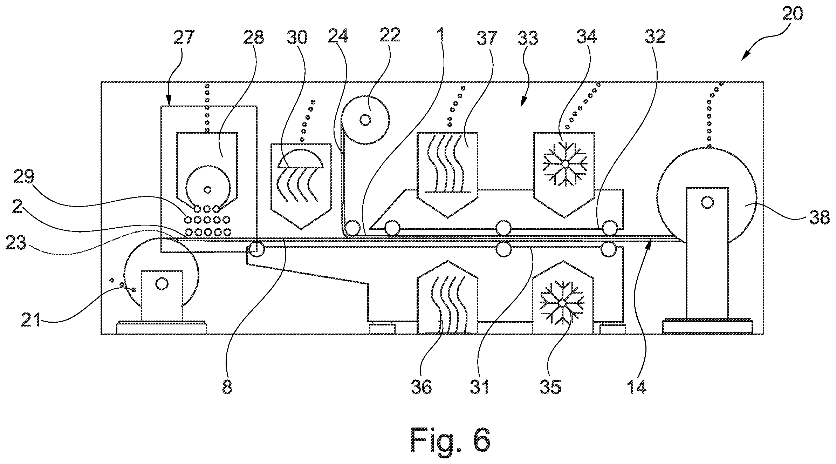

In Figur 6 ist eine Anlage 20 zur Herstellung des Nasslauf-Reibmaterials 14 schematisch dargestellt. Die Anlage 20 umfasst zwei Coils 21, 22, über welche unterschiedliche Rohpapiere 23, 24 zugeführt werden.

Der englische Begriff Coil bezeichnet eine Spule, Rolle oder Walze, auf welche die unterschiedlichen Rohpapiere 23, 24 aufgewickelt sind. Das Rohpapier 23 dient zur Darstellung der Unterlage 2 des Nasslauf-Reibmaterials 14. Das Rohpapier 24 dient zur Darstellung der Oberlage 1 des Nasslauf-Reibmaterials 14.

Die Anlage 20 umfasst eine Streupulverbeschichtungsvorrichtung 27. Die Streupulverbeschichtungsvorrichtung 27 umfasst einen Pulverstreuer 28, über den ein Harzpulver 29 auf die Unterlage 2 aufgebracht wird. Das Harzpulver 29 dient zur Darstellung der Bindermaterialschicht 8 auf der Unterlage 2.

Die Anlage 20 umfasst des Weiteren eine Doppelbandpresse 33 mit zwei Bändern 31, 32, die über nicht näher bezeichnete Antriebsrollen angetrieben sind. Die Unterlage 2 mit dem Bindermaterial 8 wird zunächst dem in Figur 6 unten angeordneten Band 31 zugeführt. Dann wird das Rohpapier 24 zur Darstellung der Oberlage 1 zugeführt. Über eine optionale Heizvorrichtung 30 kann das Bindermaterial 8 auf der Unterlage 2 vor dem Zuführen des Rohpapiers 24 beheizt werden.

Nach dem Zuführen des Rohpapiers 24 werden die beiden Rohpapiere 23 und 24 zusammen mit dem Bindermaterial 8 zwischen den Bändern 31, 32 der Doppelwandpresse 33 hindurchgeführt.

Die Doppelbandpresse 33 ist in Figur 6 oben und unten mit Heizvorrichtungen 36, 37 und Kühlvorrichtungen 34, 35 ausgestattet. Die Heizvorrichtung 36 ist in Figur 6 unten, das heißt unterhalb der Unterlage 2, angeordnet. Die Kühlvorrichtung 35 ist in Figur 6 ebenfalls unten, das heißt unterhalb der Unterlage 2, angeordnet. Die Kühlvorrichtung 37 ist in Figur 6 oben, das heißt oberhalb der Oberlage 1, angeordnet. Die Kühlvorrichtung 34 ist in Figur 6 ebenfalls oberhalb der Oberlage 1, angeordnet.

Mit den Heizvorrichtungen 36, 37 wird den Rohpapieren 23, 24 und dem dazwischen angeordneten Bindermaterial 8 Wärme zugeführt. Die zugeführte Wärme führt dazu, dass Harzanteile, insbesondere Phenolharzanteile, in der Unterlage 2, der Oberlage 1 und in dem Bindermaterial 8 aushärten, so dass sich ein stabiler Verbund ergibt, der das Nasslauf-Reibmaterial 14 darstellt. Mit den Kühlvorrichtungen 34, 35 wird das ausgehärtete Nasslauf-Reibmaterial 14 abgekühlt. Das abgekühlte Nasslauf-Reibmaterial 14 wird dann auf eine Rolle 38 aufgewickelt.

### Bezugszeichenliste

1 Oberlage
2 Unterlage
3 Transportband
4 Transportrolle
5 Transportrolle
6 Binderwalze
7 Binderwalze
8 Bindermaterial
9 Bindermaterialschicht
10 Halbzeug
11 Kalanderwalze
12 Kalanderwalze
13 Zwischenprodukt
14 Nasslauf-Reibmaterial
20 Anlage
21 Coil
22 Coil
23 Rohpapier
24 Rohpapier
27 Streupulverbeschichtungsvorrichtung
28 Pulverstreuer
29 Harzpulver
30 optionale Heizvorrichtung
31 Band
32 Band
33 Doppelbandpresse
34 Kühlvorrichtung
35 Kühlvorrichtung
36 Heizvorrichtung
37 Heizvorrichtung
38 Rolle

## Patentansprüche

1. Verfahren zum Herstellen eines mehrlagigen Nasslauf-Reibmaterials (14) für faserbasierte Reibmaterialien in Doppelkupplungsgetrieben, Automatikgetrieben, Motorradgetrieben, Einfachkupplungen, Haltekupplungen, Hybridkupplungen, Wandlerkupplungen, Differentialen oder Synchronisationen mit mindestens einer Unterlage (2) und mindestens einer Oberlage (1), die stoffschlüssig miteinander verbunden werden, **dadurch gekennzeichnet, dass** die Unterlage (2) und die Oberlage (1) zunächst aus unterschiedlichen Materialien unabhängig voneinander hergestellt werden, bevor die Unterlage (2) mit der Oberlage (1) verbunden wird, wobei die Unterlage (2) mit einem Bindermaterial (8) beschichtet wird, bevor die mit dem Bindermaterial (8) beschichtete Unterlage (2) mit der Oberlage (1) verbunden wird, **dadurch gekennzeichnet, dass** die mit dem Bindermaterial (8) beschichtete Unterlage (2) in einer Doppelbandpresse (33) mit der Oberlage (1) verbunden wird, wobei eine Oberlagenrezeptur zwanzig bis sechzig Prozent Füllstoff, zehn bis vierzig Prozent Zellstoff, fünf bis zehn Prozent Aramid und fünfundzwanzig bis fünfunddreißig Prozent Phenolharz und eine Unterlagenrezeptur zehn bis fünfzig Prozent Füllstoff, zehn bis vierzig Prozent Zellstoff, fünf bis zehn Prozent Aramid, fünf bis fünfzehn Prozent Carbon und fünfundzwanzig bis fünfunddreißig Prozent Phenolharz aufweist.

2. Verfahren nach Anspruch 1, **dadurch gekennzeichnet, dass** die Unterlage (2) und die Oberlage (1) aus unterschiedlichen Rezepturen hergestellt und als Rohpapiere (23,24) zugeführt werden.

3. Verfahren nach einem der vorhergehenden Ansprüche, **dadurch gekennzeichnet, dass** die Unterlage (2) ein Flächengewicht von hundert bis zweihundert Gramm pro Quadratmeter aufweist, wobei die Oberlage (1) ein Flächengewicht von zweihundert bis vierhundert Gramm pro Quadratmeter aufweist.

4. Verfahren nach einem der vorhergehenden Ansprüche, **dadurch gekennzeichnet, dass** die Unterlage (2) mit einem Harzpulver (29) als Bindermaterial beschichtet wird.

## Claims

1. A method for producing a multi-layered wet friction material (14) for fibre-based friction materials in dual-clutch transmissions, automatic transmissions, motorcycle transmissions, single-clutch transmissions, holding clutches, hybrid clutches, torque converter clutches, differentials, or synchronizers, comprising at least one bottom layer (2) and at least one top layer (1), which are materially bonded together, **characterized in that** the bottom layer (2) and the top layer (1) are first produced independently of each other from different materials before the bottom layer (2) is bonded to the top layer (1), wherein the bottom layer (2) is coated with a binder material (8) before the bottom layer (2) coated with the binder material (8) is bonded to the top layer (1), **characterized in that** the bottom layer (2) coated with the binder material (8) is bonded to the top layer (1) in a double-belt press (33), wherein a top layer formulation comprises twenty to sixty percent filler, ten to forty percent cellulose, and five to ten percent aramid, and contains twenty-five to thirty-five percent phenolic resin and a base layer formulation comprises ten to fifty percent filler, ten to forty percent cellulose, five to ten percent aramid, five to fifteen percent carbon and twenty-five to thirty-five percent phenolic resin.

2. The method according to claim 1, **characterized in that** the bottom layer (2) and the top layer (1) are produced from different formulations and supplied as base papers (23, 24).

3. The method according to either one of the preceding claims, **characterized in that** the bottom layer (2) has a basis weight of one hundred to two hundred grams per square metre, wherein the top layer (1) has a basis weight of two hundred to four hundred grams per square metre.

4. The method according to any one of the preceding claims, **characterized in that** the bottom layer (2) is coated with a resin powder (29) as a binder material.

## Revendications

1. Procédé de fabrication d'un matériau de friction humide multicouche (14) pour matériaux de friction à base de fibres dans les transmissions à double embrayage, les transmissions automatiques, les transmissions pour motos, les transmissions à simple embrayage, les embrayages de maintien, les embrayages hybrides, les embrayages de convertisseur de couple, les différentiels ou les synchroniseurs, comportant au moins une couche inférieure (2) et au moins une couche supérieure (1) qui sont liées ensemble par liaison de matière, **caractérisé en ce que** la couche inférieure (2) et la couche supérieure (1) sont d'abord fabriquées indépendamment l'une de l'autre à partir de matériaux différents avant que la couche inférieure (2) ne soit liée à la couche supérieure (1), la couche inférieure (2) étant revêtue d'une matière liante (8) avant que la couche inférieure (2) revêtue de matière liante (8) ne soit liée à la couche supérieure (1), **caractérisé en ce que** la couche inférieure (2) revêtue de matière liante (8) est liée à la couche supérieure (1) dans une presse à double courroie (33), une formulation de couche supérieure comprenant de vingt à soixante pour cent de charge, de dix à quarante pour cent de cellulose, de cinq à dix pour cent d'aramide et de vingt-cinq à trente-cinq pour cent de résine phénolique et une formulation de couche inférieure comprenant de dix à cinquante pour cent de charge, de dix à quarante pour cent de cellulose, de cinq à dix pour cent d'aramide, de cinq à quinze pour cent de carbone et de vingt-cinq à trente-cinq pour cent de résine phénolique.

2. Procédé selon la revendication 1, **caractérisé en ce que** la couche inférieure (2) et la couche supérieure (1) sont fabriquées à partir de formulations différentes et fournies sous forme de papiers bruts (23, 24).

3. Procédé selon l'une quelconque des revendications précédentes, **caractérisé en ce que** la couche inférieure (2) présente un grammage de cent à deux cents grammes par mètre carré, la couche supérieure (1) présentant un grammage de deux cents à quatre cents grammes par mètre carré.

4. Procédé selon l'une quelconque des revendications précédentes, **caractérisé en ce que** la couche inférieure (2) est recouverte d'une résine en poudre (29) comme matière liante.
